Europäisches Patentamt

European Patent Office

Office européen des brevets

(19)

(11) Veröffentlichungsnummer : **0 122 445**
**B1**

(12)

# EUROPÄISCHE PATENTSCHRIFT

(45) Veröffentlichungstag der Patentschrift :
28.06.89

(21) Anmeldenummer : 84102624.8

(22) Anmeldetag : 10.03.84

(51) Int. Cl.⁴ : **H 02 P 1/52**, H 02 M 5/45,
B 63 H 23/24

(54) Kontinuierliche Bordnetzversorgung aus dem Fahrnetz bei Drehstrom-Schiffsantrieben variabler Frequenz und Teilumrichter.

(30) Priorität : 23.03.83 DE 3310506

(43) Veröffentlichungstag der Anmeldung :
24.10.84 Patentblatt 84/43

(45) Bekanntmachung des Hinweises auf die Patenterteilung : 28.06.89 Patentblatt 89/26

(84) Benannte Vertragsstaaten :
BE DE FR GB IT NL SE

(56) Entgegenhaltungen :
DE—A— 3 212 457
US—A— 4 338 525

(73) Patentinhaber : **Licentia Patent-Verwaltungs-GmbH**
**Theodor-Stern-Kai 1**
**D-6000 Frankfurt/Main 70 (DE)**

(72) Erfinder : **Kranert, Klaus, Dr.-Ing.**
**Wittenbergener Weg 9**
**D-2000 Hamburg 56 (DE)**
Erfinder : **Lösekann, Wolfgang, Dipl.-Ing.**
**Autal 1**
**D-2000 Wedel/Holstein (DE)**

(74) Vertreter : **Lertes, Kurt, Dr. et al**
**Licentia Patent-Verwaltungs-GmbH Theodor-Stern-Kai 1**
**D-6000 Frankfurt/M 70 (DE)**

## Beschreibung

Die Erfindung befaßt sich mit einer Anordnung zur kontinuierlichen Bordnetzversorgung gemäß den Merkmalen der Oberbegriffe des Anspruches 1.

Für Schiffspropellerantriebe werden neben Gas- bzw. Dampfturbinen, in der Mehrzahl Diesel, eingesetzt.

Aus unterschiedlichen Gründen können die Drehzahlen der Aggregate nicht unterhalb einer bestimmten Grenze eingestellt werden.

Soll für Antriebe von Sonderschiffen auch eine niedrigere Drehzahl ermöglicht werden, so ist u. a. ein elektrischer Antrieb einsetzbar. Bei einem Gleichstromantrieb wird in der Regel der GS-Motor über einen Stromrichter von einem oder mehreren Fahrgeneratoren gespeist, die mit konstanter Spannung und Frequenz arbeiten und durch geeignete Primärenergiewandler angetrieben werden.

Hierbei ist parallel von der Fahrschiene eine Spannungsversorgung des Bordnetzes möglich. Der Antrieb kann in allen 4 Quadranten betrieben werden. Das gleiche gilt für einen Drehstrompropellermotor mit Zwischenkreisumrichter.

Es ist auch bekannt, einen Motor einer Propellerantriebsanlage über Stromrichter im ganzen Drehzahlbereich und das Bordnetz aus der Fahrschiene zu speisen. Diese haben dann konstante Spannung und Frequenz. In diesem Zusammenhang wird auf die Zeitschrift « Hansa », 1978, Seiten 43 bis 57 hingewiesen.

Der Stromrichter in dieser Anlage muß für die Gesamtleistung des Propellerantriebes ausgelegt sein.

Generatoren und Motoren sind größer zu bemessen. Im Teildrehzahlbereich arbeiten die Primärenergiewandler mit einem schlechten Wirkungsgrad.

Eine kostengünstigere Lösung bei kaum eingeschränkter Manövrierfähigkeit ist der Einsatz eines DS/DS-Anfahrumrichters für den Drehzahlbereich, der nicht von den Primärenergiewandlern abgedeckt wird.

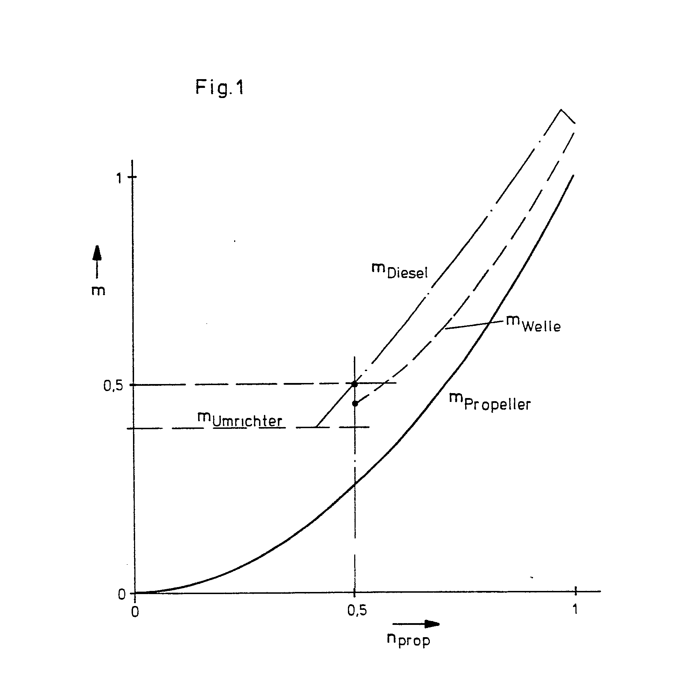

In Fig. 1 sind in einem Drehmoment/Drehzahl-Diagramm die Leistungskennlinien des Anfahrumrichters $m_u$, des Propellers $m_p$, eines Dieselmotors $m_D$ und des Primärwandlers $m_w$ dargestellt.

Der über den Umrichter verfügbare Fahrbereich ist durch $m_u$ begrenzt. Oberhalb der Minimaldrehzahl des Primärenergiewandlers wird der Umrichter überbrückt und der Antrieb als elektrische Welle betrieben, wobei die Propellerdrehzahl mit der Drehzahl des Primärenergiewandlers einstellbar ist (vgl. DE-P 31 33 311.7).

Bei dieser Konfiguration ist bislang keine Speisung des Bordnetzes durch den Fahrgenerator möglich.

Es ist daher die der Erfindung zugrundeliegende Aufgabe darin zu sehen, eine Anordnung der eingangs erwähnten Art zu schaffen mit der ein Propellerbetrieb elektrische Welle mit Anfahrumrichter in allen vier Quadranten bei gleichzeitiger Speisung des Bordnetzes durch einen mit veränderlicher Spannung und Frequenz betriebenen Drehstrom-Fahrgenerator gewährleistet ist.

Diese Aufgabe wird erfindungsgemäß durch die im Kennzeichen des Hauptanspruches angegebenen Merkmale gelöst.

Hierbei wird von der Erkenntnis ausgegangen, daß bei zutreffend gewählter Leistung des Primärenergiewandlers das oberhalb der Minimaldrehzahl zur Verfügung stehende Drehmoment $m_w$ (Fig. 1) zum Propellerdrehmoment $m_p$ so viel Reserve besitzt, daß das Bordnetz über den hier nicht mehr benötigten Anfahrumrichter gespeist werden kann.

Die Anordnung nach der Erfindung weist wesentliche Vorteile gegenüber dem Bekannten auf.

Durch die Möglichkeit, die Antriebs- und Bordnetzleistung aus einem gemeinsamen mit billigem Schweröl betriebenen Aggregat zu beziehen, wird der Gesamtwirkungsgrad verbessert.

Außerdem wird das Aggregat bei Teildrehzahlen des Propellermotors gegenüber einer Fahranlage mit einem Stromrichter für alle Drehzahlen besser ausgenutzt. Der spezifische Kraftstoffverbrauch wird bis zu 32 % bei 50 % Drehzahl und darunter gesenkt.

Hinzu kommt eine Verbesserung des Wirkungsgrades um ca. 2 % bei Betrieb oberhalb der Anfahrumrichterdrehzahl, da hier der Umrichter für die Fahranlage nicht mehr eingesetzt wird und seine typischen Verluste entfallen. Bei Verwendung eines angeflanschten Bordnetzgenerators an das Fahraggregat bei Anfahrumrichterbetrieb werden elektromagnetische Störungen (EM), verursacht durch Stromrichter, auf dem Bordnetz vermieden. Nach dem Hochfahren der Anlage kann bei Nenndrehzahl der elektrischen Welle die Versorgung des Bordnetzes dann vom Fahranlagengengenerator übernommen werden. Hier ist nur für eine relativ kurze Zeit des Hochlaufs die Speisung des Bordnetzes über den Umrichter mit seinen unvermeidlichen EM-Störungen erforderlich.

Diese Tatsache begünstigt den Einsatz dieser Anlage auf Forschungsschiffen o. ä., die in ihrem Operationsgebiet nur mit Teilleistung und dann mit einem ungestörten Bordnetz fahren.

Außerdem ist die Anlage vorzugsweise auf Schiffen einsetzbar, die eine gute Manövrierfähigkeit erfordern, wie Fähren, Versorger, Rettungsschiffe, usw., die im unteren Fahrtbereich ($n_{prop} < 0,5$) erhebliche Brennstoffkosten einspart.

Weiterbildungen der Erfindung sind in den abhängigen Ansprüchen gekennzeichnet.

In der Zeichnung ist ein Ausführungsbeispiel nach der Erfindung dargestellt.

Es zeigen

Fig. 2 Die Anordnung einer Fahranlage

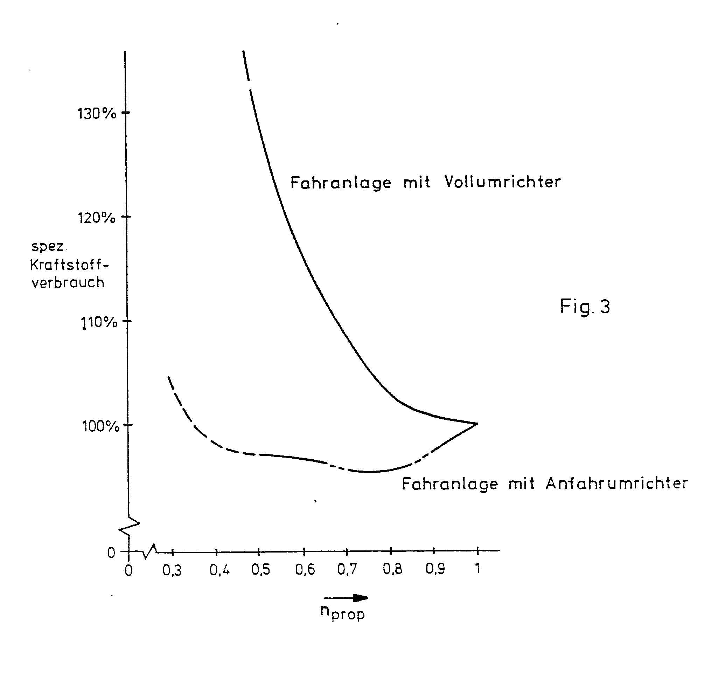

Fig. 3 in einem Kraftstoffverbrauch/Drehzahl-Diagramm die Kennlinien für eine Fahranlage mit Vollumrichter und mit Anfahrumrichter.

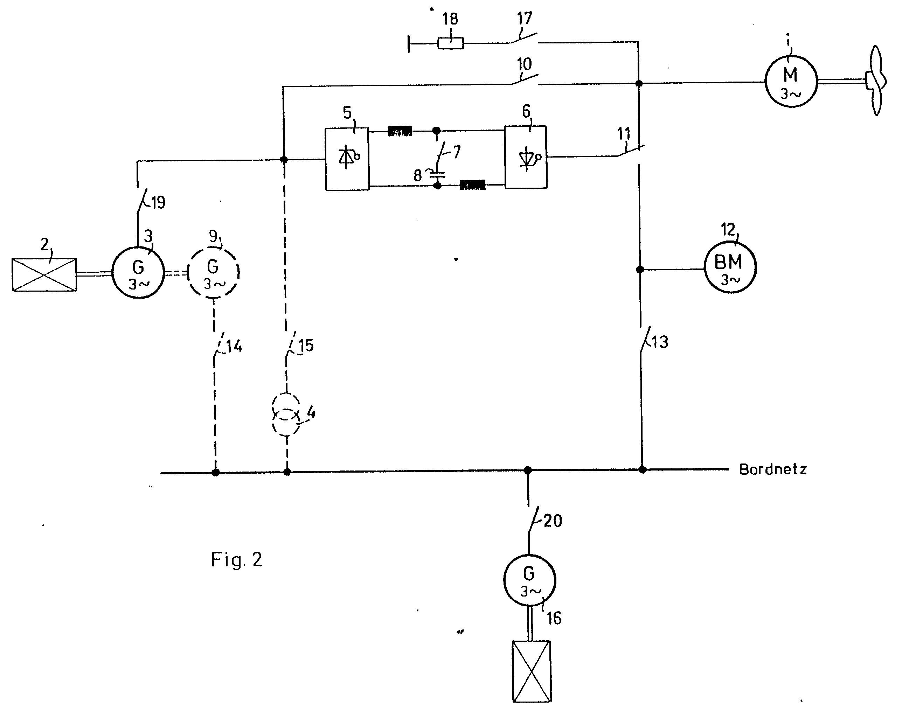

Wird nach Fig. 2 die Nennfrequenz des Propellermotors 1 so gelegt, daß bei der gegebenen Minimaldrehzahl des Primärenergieerzeugers 2 der Fahrgenerator 3 bei u/f = const-Regelung Bordnetzfrequenz abgibt, so kann das Bordnetz über einen Transformator 4 gespeist werden, während der Motor 1 über den Zwischenkreisumrichter 5...8 frequenzentkoppelt betrieben wird.

Bei gleicher Spannung kann der Transformator entfallen.

Ist es konstruktiv nicht möglich, die Minimalfrequenz des Fahrgenerators gleich der Bordnetzfrequenz zu wählen, so kann das Bordnetz über einen angeflanschten Generator 9, der durch entsprechende Polpaarzahl die erforderliche Bordnetzfrequenz erzeugt, versorgt werden.

Wird bei erforderlicher höherer Drehzahl des Propellermotors 1 der Umrichter durch den Schalter 10 überbrückt, so schaltet der Umschalter 11 den Umrichter 5....8 vom Motor 1 frei und die Synchronblindleistungsmaschine 12 auf den Umrichter. Die Maschine kann schon vorher durch einen Anwurfmotor oder bei geschlossenem Schalter 13 asynchron vom Bordnetz gestartet worden sein. Im anderen Fall wird sie durch den Umrichter auf Nennfrequenz gefahren und der Schalter 13 geschlossen. Danach übernimmt der Umrichter die Bordnetzversorgung.

Ist der Wechselrichter netzgeführt, so liefert die Blindleistungsmaschine die erforderliche Kommutierungs- und Steuerblindleistung sowie die Netzblindleistung und sorgt für den geforderten Strom im Kurzschlußfall. Ist der Wechselrichter selbstgeführt, so muß die Blindleistungsmaschine nur die entsprechende Blindleistungs- und Kurzschlußstromversorgung für das Bordnetz übernehmen.

Hat der Umrichter die Bordnetzlast übernommen, so kann der Transformator 4 oder Generator 9 über die Schalter 15 bzw. 14 abgeschaltet werden. Der Primärenergieerzeuger 2 kann seine Drehzahl und damit die Drehzahl des Propellermotors 1 erhöhen, wobei durch den Generator 3 die Spannung proportional angehoben wird. Der Umrichter entkoppelt Frequenz und Spannung. Systemeigene Spannungsspitzen werden durch einen zuschaltbaren Kondensator 7,8 im Gleichstromzwischenkreis geglättet.

Ist die Nennfrequenz der elektrischen Welle gleich der Bordnetzfrequenz, so kann bei Propellernenndrehzahl das Bordnetz mit dem Fahrnetz synchronisiert und dann über den Transformtor 4 mit Schalter 15 verbunden werden. Der Umrichter wird durch Schalter 11 oder 13 vom Bordnetz getrennt. Die Anlage erlaubt ein schnelles Reversieren oder einen Notstop aus erhöhter Schiffsfahrt. In diesem Fall wird der Schalter 10 geöffnet und der Bremsschalter 17 geschlossen. Der Motor 1 treibt über seine Erregung geregelt einen definierten Strom in den Bremswiderstand 18. Wird das Bordnetz direkt über den Transformtor 4 betrieben, so muß der Umrichter 5...8 die Bordnetzversorgung übernehmen. Die Blindleistungsmaschine ist zu diesem Zweck wieder anzulassen, wenn sie nicht vorher mitlief. Mit Schalter 11 und 13 (wenn nicht schon geschlossen) wird der Umrichter auf das Bordnetz gechaltet. Er kann Last übernehmen. Schalter 15 wird geöffnet.

Die Drehzahl des Primärenergiewandlers 2 wird auf die Minimaldrehzahl, die Bordnetzfrequenz entspricht, zurückgenommen und mit dem Bordnetz synchronisiert.

Schalter 14 bzw. 15 werden geschlossen und 13 geöffnet. Damit ist der Umrichter für die Propellermotorspeisung frei.

Schalter 11 wird umgeschaltet. Inzwischen wurde der Motor durch die Bremsung auf den Widerstand 18 verzögert und der Bremsschalter 17 kann geöffnet werden.

Der Umrichter fährt, sobald seine Auslegung bezüglich Drehmoment es zuläßt, den Motor aus dem 4. Quadranten in den 3. Quadranten. Sollte es erforderlich sein, so kann, wie oben beschrieben, der Umrichter mit Schalter 10 überbrückt werden, um eine höhere Drehzahl in entgegengesetzter Drehrichtung mit dem Betrieb als elektrische Welle zu erhalten. Für diesen Fall muß Schalter 10 als Phasenwendeschalter ausgelegt sein.

Die erforderliche Schaltanlage kann relativ einfach gehalten werden, wenn man berücksichtigt, daß außer den Schaltern 10, 17 und 20 alle anderen stromlos schaltbar sind. Als Kurzschlußschutz sind nur die Schalter 13, 20, 14/15 und 19 auszulegen (14/15 sind alternativ zu betrachten). Es kann davon 0,5 ausgegangen werden, daß der Übergang von dem Manöverbereich $n_{prop} < 0,5$ auf Marschfahrt und umgekehrt relativ selten erfolgt. Das gleiche gilt für ein Notstoppmanöver aus voller Schiffsgeschwindigkeit. Die Schalthäufigkeit der Schalter 10, 17, 11, 13, 14/15 ist also sehr gering und es kann von langen Standzeiten ausgegangen werden. Die Schalter 19, 14/15 und 20 wären als Lastschalter und Kurzschlußschutz auch bei einer herkömmlichen Anlage erforderlich.

Um während des Betriebes mit dem Anfahrumrichter starke Frequenzschwankungen von Generator 3 bzw. 9 zu vermeiden, wird der Propellermotorstrom im Gleichstromzwischenkreis über den Generatorstromrichter 5 in der Art begrenzt, daß die Drehzahl des Primärenergiewandlers bei Belastungen durch den Propellermotor annähernd konstant bleibt. Der Vorteil dieses Verfahrens liegt darin, daß bei voller Manövrierfähigkeit des Propellermotors von 6 % bei Nenndrehzahl das Bordnetz kontinuierlich vom Antriebsaggregat der Fahranlage versorgt wird. Es kann ein Bordnetzaggregat — nach Absprache mit den Klassifikationsgesellschaften — eingespart werden.

Das mit Dieselöl betreibbare Aggregat 16 ist nur noch für stand by-Betrieb, den Notfall oder im Hafen erforderlich.

Dieses Konzept ermöglicht ein « Drücken » der Minimal-Dauerdrehzahl des Hauptdiesels durch Erhöhen der Teillast entsprechend der Propellerleistungskurve um den Betrag der Bordnetzlast (> 10 % $P_N$ bei Spezialschiffen). Es ist die energieökonomische Alternative zu dem elektrischen Antrieb mit Verstellpropeller.

**Patentansprüche**

1. Anordnung zur Bordnetzversorgung bei einem Drehstrom-Schiffsantrieb variabler Frequenz mit von einem Primärenergiewandler (2) angetriebenen Fahrgenerator (3), einem Anfahrumrichter (5...8) und einem mit konstantem Spannungs-Frequenz-Verhältnis gespeisten Propellermotor (1), wobei der Propellermotor (1) in einem unteren Drehzahlbereich bei konstanter Minimal-Drehzahl des Primärenergiewandlers (2) über den Anfahrumrichter (5...8) angeschlossen und im Bereich oberhalb der Minimal-Drehzahl unmittelbar mit dem Fahrgenerator (3) nach Art einer elektrischen Welle verbunden ist, gekennzeichnet durch eine Anordnung zur kontinuierlichen Energielieferung für das Bordnetz durch den Primärenergiewandler (2), wobei im unteren Drehzahlbereich vom Fahrgenerator (3) über einen Transformator (4) zwischen Fahrschiene und Bordnetzschiene oder von einem an den Fahrgenerator (3) angekuppelten weiteren Generator (9) Bordnetzfrequenz und -spannung abgegeben wird, und wobei im Bereich oberhalb der Minimal-Drehzahl der Anfahr-Umrichter (5...8) vom Propellermotor (1) getrennt und unter Einschaltung einer Synchronblindleistungsmaschine (12) auf das Bordnetz geschaltet ist.

2. Anordnung nach Anspruch 1, dadurch gekennzeichnet, daß die Nennfrequenz des Propellermotors (1) so gewählt ist, daß bei Minimal-Drehzahl des Primärenergiewandlers (2) der Fahrgenerator (3) Bordnetzfrequenz abgibt.

3. Anordnung nach Anspruch 1, dadurch gekennzeichnet, daß im Gleichstromzwischenkreis der Umrichter (5...8) für Glättung systemeigener Spannungsspitzen eine abschaltbare Kapazität (7, 8) vorgesehen ist.

4. Anordnung nach Anspruch 1, dadurch gekennzeichnet, daß der Überbrückungsschalter (10) des Umrichters (5...8) als Phasenwendeschalter ausgelegt ist.

5. Anordnung nach Anspruch 1, dadurch gekennzeichnet, daß im Anfahrbetrieb der Propellermotorstrom im Gleichstromzwischenkreis über den Generatorstromrichter (5) zur Konstanthaltung der Drehzahl des Primärwandlers (2) begrenzt wird.

**Claims**

1. Arrangement for the board mains supply in a polyphase alternating current ship's drive of variable frequency with a propulsion generator (3) driven by a primary energy converter (2), a starting-up inverter (5 to 8) and a propeller motor (1) fed at a constant ratio of voltage to frequency, wherein the propeller motor (1) is connected — in a lower rotational speed range at constant minimum rotational speed of the primary energy converter (2) — by way of the starting-up inverter (5 to 8) and — in the range above the minimum rotational speed — directly with the propulsion generator (3) in the manner of an electrical shaft, characterised by an arrangement for the continuous energy supply for the board mains by the primary energy converter (2), wherein board mains frequency and voltage are supplied in the lower rotational speed by the propulsion generator (3) by way of a transformer (4) between propulsion rail and board mains rail or from a further generator (9) coupled to the propulsion generator (3) and wherein — in the range above the minimum rotational speed- the starting-up inverter (5 to 8) is separated from the propeller motor (1) and connected with the interposition of a synchronous phase changer (12) to the board mains.

2. Arrangement according to claim 1, characterised thereby, that the nominal speed of the propeller motor (1) is so chosen that the propulsion generator (3) supplies the board mains frequency at the minimum rotational speed of the primary energy converter (2).

3. Arrangement according to claim 1, characterised thereby, that a switchable capacitance (7, 8) for the smoothing of voltage peaks inherent in the system is provided in the direct current circuit of the inverters (5 to 8).

4. Arrangement according to claim 1, characterised thereby, that the bridging switch (10) of the inverter (5 to 8) is designed as phase-reversing switch.

5. Arrangement according to claim 1, characterised thereby, that in starting-up operation, the propeller motor current in the intermediate direct current circuit is limited by way of the generator current inverter (5) in order to keep the rotational speed of the primary converter (2) constant.

**Revendications**

1. Dispositif d'alimentation du réseau de bord, dans le cas d'une propulsion de navires à courant triphasé de fréquence variable, comportant un générateur de navigation (3) entraîné par un convertisseur d'énergie primaire (2), un convertisseur de démarrage (5...8) et un moteur d'hélice (1) alimenté selon un rapport tension-fréquence constant, le moteur d'hélice (1) étant raccordé par l'intermédiaire du convertisseur de démarrage (5...8) dans une gamme de vitesse inférieure, à une vitesse minimale constante du convertisseur d'énergie primaire (2), et directement relié au générateur de navigation (3), à la manière d'un arbre électrique, dans la gamme des vitesses supérieures à la vitesse minimale, caractérisé par un dispositif de fourniture continue d'énergie pour le réseau de bord par le convertisseur d'énergie primaire (2), la fréquence et la tension du réseau de bord étant délivrées, dans la gamme des vitesses inférieures, par le générateur de navigation (3), par l'intermédiaire d'un transformateur (4) entre la barre d'alimentation pour la navigation et la barre d'alimentation du réseau de bord, ou par un autre générateur (9), accouplé au générateur de navigation (3) et dans la gamme des vitesses supérieures à la vitesse minimale, le convertisseur de démarrage (5...8) étant séparé du moteur d'hélice (1), et commuté sur le réseau de bord, par insertion d'un compensateur synchrone (12).

2. Dispositif selon la revendication 1, caractérisé en ce que la fréquence nominale du moteur d'hélice (1) est choisie telle qu'à la vitesse minimale du convertisseur d'énergie primaire (2), le générateur de navigation (3) fournit la fréquence de réseau de bord.

3. Dispositif selon la revendication 1, caractérisé en ce qu'il est prévu une capacité (7, 8) pouvant être coupée, dans le circuit intermédiaire à courant continu des convertisseurs (5...8), pour atténuer les pointes de tension propres au système.

4. Dispositif selon la revendication 1, caractérisé en ce que l'interrupteur (10) de shuntage du convertisseur (5...8) est un inverseur de phase.

5. Dispositif selon la revendication 1, caractérisé en ce que pendant le fonctionnement de démarrage, le courant du moteur d'hélice est limité dans le circuit intermédiaire à courant continu, par le convertisseur de générateur (5), pour maintenir constante la vitesse de rotation du convertisseur primaire (2).

## Fig.1

18   17

10

M
3~

5   6

11

7

8

19

2   3   9   12
G   G   BM
3~   3~   3~

14   15

13

4

Bordnetz

20

Fig. 2

G
3~

16

130%

120%

spez.
Kraftstoffverbrauch

110%

100%

Fahranlage mit Vollumrichter

Fig. 3

Fahranlage mit Anfahrumrichter

0

0    0,3    0,4    0,5    0,6    0,7    0,8    0,9    1

$n_{prop}$